# EUROPEAN PATENT APPLICATION

(11) **EP 2 081 321 A2**
(43) Date of publication of application: **22.07.2009**
(21) Application number: 09150717.8
(22) Date of filing: 16.01.2009
(51) Int. Cl.: H04L 12/24

(54) **Sampling apparatus distinguishing a failure in a network even by using a single sampling and a method therefor**

(30) Priority: 16.01.2008 JP 2008006703
(71) Applicant: Oki Electric Industry Co., Ltd., Minato-ku Tokyo 105-8460 (JP)
(72) Inventor: Nakamura, Nobuyuki, Tokyo 105-8460 (JP)
(74) Representative: Betten & Resch

(57) **Abstract**

A network analyzer (10) includes a sampler (12) and a network anomaly detector (14). The sampler (12) acquires communication data (26) flowing through nodes by a data collector (16), estimates a topology of the nodes based on the acquired communication data (28) by a topology estimator (18), stores the estimated topology (30) of the nodes in a storage (20), reads out the estimated result (32) from the storage (20) to generate a predetermined item for each read-out topology of the nodes as a sampling rule (34) by a rule generator (22), and samples the supplied communication data (28) based on the generated sampling rule (34) by a packet sampler (24). The topology of the network is thereby estimated in advance to narrow down objects to be sampled. The behavior of the communication data can thus be grasped in correlation between a target network and other networks.

## Description

### BACKGROUND OF THE INVENTION

### Field of the Invention

The present invention relates to a sampling apparatus, and more particularly to a packet-sampling apparatus for sampling communication packets flowing through a node of a telecommunications network. The present invention also relates to sampling method, and more particularly to a method for sampling communication packets flowing through a node of a telecommunications network based on estimation for a topology.

### Description of the Background Art

Conventional methods for sampling packets for a traffic analysis have been developed from the viewpoint how to convert packets or communication flow into statistical information. Such methods are standardized by a document such as T. Zseby, et al., "Sampling and Filtering Techniques for IP Packet Selection", July 9, 2008, http://www.ietf.org/internet-drafts/draft-ietf-psamp-sample-tech-10.txt. In Chapter 5 of this document, general methods for sampling are listed. According to these descriptions, the methods for sampling are classified into two principal types.

One of the types is a systematic sampling, in which time or the number of packets is systematically used to extract packets to obtain statistical information based on the extracted packets.

The other is a random sampling in which packets are stochastically selected or extracted based on a communication flow to obtain statistical information based on the extracted packets.

Japanese Patent Laid-Open Publication No. 2003-318985 discloses a method and a system for monitoring the quality state on a packet transfer network. The object of that method for monitoring the quality state is to enable the occurrence of a quality loss to be identified and located on a packet network. In the method taught by Japanese '985 publication, the state of transmission is compared with the state of reception of packets to be monitored to thereby monitor the network quality, thus determining, when detecting a quality loss, a block including the quality loss. In the method, a plurality of measurement devices to be monitored which are provided in a network for measuring the quality of the network probe packets to obtain a sequence of packet passage times to calculate a cross-correlation function based on the sequence to evaluate the quality. When determining that the quality loss occurs, a logical topology produced in advance as a tree structure from routing information for transferring packets are used to locate the quality loss occurring.

The method for sampling disclosed by T. Zseby et al., described above is used in order to observe packets flowing through a specific router or the like at intervals of, for example, one minute, and sample selected one of the observed packets for that specific router or the network interface included in that router to hold statistical information on which type of parameters the sampled packet includes.

This method can, however, obtain the statistical information about only the single router. The method cannot obtain statistical information for the entire network formed by a plurality of routers.

In addition, when using the technique described in Japanese '985 publication, it could be proposed that monitor devices probe packets to aggregate obtained data, thereby managing the quality of the entire network. In this case, however, a target for quality management is restricted to the probed network. For example, in the case of managing security, when the target network has no problem with the probed result, this suggested technique may suffice as management per se. In the case of managing security, however, the target to be managed may be affected by other networks, or the target network may be deteriorated in quality due to other networks. Since the target to be managed is thus restrictive, a sufficient quality management would not attained on the target network.

Inaddition, if the quality state of a network in question were disclosed to other networks, the providers of the other networks would be aware of secret information such as the size, equipment and topology information of the network. It is thus difficult to disclose the quality state of a target network, which is a remote cause to further promote the closure of the quality state.

### SUMMARY OF THE INVENTION

It is therefore an object of the present invention to provide a sampling apparatus capable of distinguishing a failure in each network or node even by using only a sampling result of a single point, and a method therefor.

In accordance with the present invention, an apparatus for sampling communication data supplied through a plurality of nodes based on a sampling rule includes a data collecter for acquiring the communication data flowing through the nodes, a topology estimator for estimating a topology formed by the nodes based on the acquired communication data, a storage for storing at least tree information of the estimated topology, a rule generator for reading out the tree information of the estimated topology from the storage and setting a predetermined item to be sampled for each read-out tree information as the sampling rule to generate the sampling rule, and a sampler for sampling the acquired communication data based on each generated sampling rule.

Further in accordance with the present invention, a method for sampling communication data supplied through a plurality of nodes based on a sampling rule includes a first step of acquiring the communication data by a data collector for capturing the communication data flowing through the nodes, a second step of estimating a topology of the nodes by a topology estimator for estimating the topology of the nodes based on the acquired communication data, a third step of storing the estimated topology of the nodes in a storage for storing the estimated topology of the nodes, a fourth step of generating the sampling rule by a rule generator for reading out the estimated result from the storage to generate a predetermined item for each read-out topology of the nodes as the sampling rule, and a fifth step of sampling the communication data by a sampler for sampling the supplied communication data based on the generated sampling rule.

A device and a method in accordance with the present invention are to sample communication data supplied through a plurality of nodes based on a sampling rule. The device acquires the communication data by a data collector for capturing the communication data flowing through the nodes, estimates a topology of the nodes by a topology estimator for estimating the topology of the nodes based on the acquired communication data, stores the estimated topology of the nodes in a storage for storing the estimated topology of the nodes, generates the sampling rule by a rule generator for reading out the estimated result from the storage to generate a predetermined item for each read-out topology of the nodes as the sampling rule, and samples the communication data by a sampler for sampling the supplied communication data based on the generated sampling rule. The topology of the network is thereby estimated in advance to narrow down objects to be sampled. The behavior of the communication data can thus be grasped in a correlation with other networks. Even by using only the sampling result of a single point to monitor the network, advantageously the communication data is readily sampled in distinction between failures of the target network and other networks.

### BRIEF DESCRIPTION OF THE DRAWINGS

The objects and features of the present invention will become more apparent from consideration of the following detailed description taken in conjunction with the accompanying drawings in which:
FIG. 1 is a schematic block diagram showing a configuration of an embodiment of a network analyzer to which a network monitor in accordance with the present invention is applied;
FIG. 2 is a flowchart useful for understanding a procedure of main operations in the network analyzer shown in FIG. 1;
FIG. 3A shows one example of an actual topology formed by nodes connected to the network analyzer shown in FIG. 1;
FIG. 3B shows a tree estimated with a network F in the network analyzer shown in FIG. 1 set to a root node;
FIG. 4 is a flowchart useful for understanding a procedure, subroutine 1, for estimating the topology in the network analyzer shown in FIG. 2;
FIG. 5 is a flowchart useful for understanding a procedure, subroutine 2, for generating a sampling rule in the network analyzer shown in FIG. 2;
FIG. 6 shows items of the sampling rule generated by a rule generator in the network analyzer shown in FIG. 1 and data examples for the items;
FIG. 7 shows an example of statistical information obtained by a packet sampler based on the sampling rule in the network analyzer shown in FIG. 1;
FIG. 8 is a flowchart useful for understanding a procedure, subroutine 3, for detecting a problem by a network anomaly detector in the network analyzer shown in FIG. 2; and
FIG. 9 is a schematic block diagram showing a partial configuration of an alternative embodiment of a network analyzer to which a network monitor in accordance with the present invention is applied.

### DESCRIPTION OF THE PREFERRED EMBODIMENTS

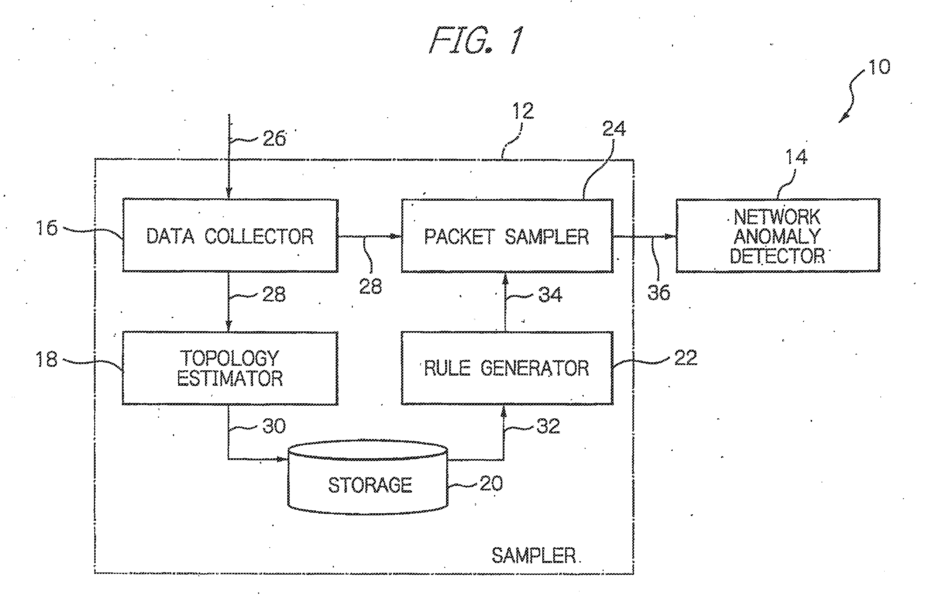

Well, reference will be made to accompanying drawings to describe in detail a network monitor in accordance with preferred embodiments of the present invention. With reference first to FIG. 1, a network monitor in accordance with a preferred embodiment of the present invention is adapted to sample communication data supplied through a plurality of communication nodes based on a sampling rule, and embodied in the form of network analyzer 10, which includes a sampler 12 and a network anomaly detector 14 interconnected as illustrated. Elements or portions not directly relevant to understanding the present invention will neither be described nor shown.

In the sampler 12, communication data 26 are acquired by a data collector 16, and a topology of the node is estimated by a topology estimator 18 based on the acquired communication data 28 to store the estimated topology 30 in a storage 20, from which a rule generator 22 reads out an estimation result to produce predetermined items for each read-out topology 30 of the nodes as a sampling rule 34, based on which a packet sampler 24 samples the supplied communication data 28 to thereby estimate the topology of the network thus in advance. Thus, objects to be sampled can be made restrictive so as to allow the behavior of communication data to be grasped in a correlation with other networks. This advantageously enables, even by using only the sampling result of a single point to monitor the network, communication data to readily be sampled in distinction between failures of the target network and other networks. In the description, signals or data are designated with reference numerals for connection lines on which they appear.

The network analyzer 10 is connected to a telecommunications network, not shown, conveying communication packets to be sampled, and has a function to sample data by a method described below to analyze an anomaly in the network based on the sampled data. In this connection, the network analyzer 10, as shown in FIG. 1, includes the sampler 12 and the network anomaly detector 14.

The sampler 12, connected to the network conveying communication packets to be sampled, sometimes referred to as a target or own network, has a function to estimate the topology of the connected network to generate a sampling rule based on the estimated topology, and sample the supplied data based on the generated sampling rule to obtain statistical information as a quality indicator of each network. The sampler 12, which is thus adapted to obtain the statistic of the quality indicator of respective networks for which a network topology is formed for the purpose of generating such statistical information, can distinguish the influence of failures caused by other networks from a failure caused by the target network in which the network analyzer 10 is involved even by using only the sampling result of a single point. The sampling method will be described below in detail.

In order to enable this function, the sampler 12 includes, as shown in FIG. 1, the data collector 16, the topology estimator 18, the storage 20, the rule generator 22, and the packet sampler 24, which are interconnected as depicted.

The data collector 16 connected to the network, and has a function to capture communication packets flowing through the network as data. The data collector 16 has an appropriate network interface, not shown, adapted to the connected network. The data collector 16 captures a communication packet 26 flowing through the network to output a captured communication packet 28 to the topology estimator 18 and the packet sampler 24.

The topology estimator 18 has a function to estimate the topology of the connected network and adjacent networks based on the captured packet. The topology estimator 18 uses the captured packet 28 to estimate the topology of the connected and adjacent networks, and stores an estimation result 30 in the storage 20. The estimating method will be described below.

The storage 20 has a function to store the estimated topology. The storage 20, from the viewpoint of sampling capacity, is preferably constituted by a relatively large-capacity storage such as an HDD (Hard Disk Drive). The storage 20 stores the estimation result 30 obtained by the topology estimator 18 to output stored estimation result 32 to the rule generator 22.

Moreover, the storage 20 may store not only the result of the estimated topology of the network but also the data captured by the data collector 16, a sampling rule described below, or sampled statistical information.

The rule generator 22 has a function to generate a sampling rule for packets based on the estimation result of the network topology. The rule generator 22 reads out the estimation result 28 of the network topology stored in the storage 20 to generate a sampling rule for packets based on the estimation result 28. The rule generator 22 outputs the generated sampling rule 30 to the packet sampler 24.

Now, the term "sampling rule" is comprehended as a rule defining how to sample packets captured by the data collector 16 or how to aggregate packets. The packet sampler 24 has a function to sample the supplied packet 28 under the supplied sampling rule 34.

The topology estimator 18, the rule generator 22, and the packet sampler 24 can be implemented by hardware such as circuit devices attaining their functions, or by a processor system such as a CPU (Central Processing Unit) or a microcomputer and software defining its operation.

In this constitution described above, the sampler 12, connected to the network transmitting communication packets to be sampled, can estimate the topology of the connected network to produce a sampling rule based on the estimated topology, and sample the supplied data based on the generated sampling rule to obtain statistical information as a quality indicator in each of the networks.

The network anomaly detector 14 has a function to receive the supplied statistical information to detect and monitor an anomaly in the network based on the statistical information. The detecting method will be described below. The detected result is supplied to a display monitor, not shown, and displayed thereon as a monitored result.

The network anomaly detector 14 may also be implemented by hardware such as circuit devices accomplishing its function, or by a processor system such as a CPU or a microcomputer and software defining its operation.

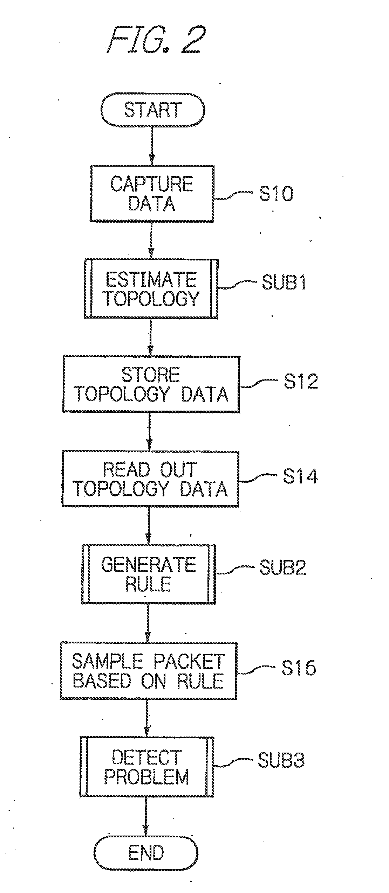

Next, with reference to FIG. 2, operations of the network analyzer 10 of the illustrative embodiment will be described. The network analyzer 10 is connected to a target network transmitting communication packets to be sampled. The network analyzer 10 captures packets supplied from the connected network by the data collector 16 (step S10). The data collector 16 outputs the captured packet 28 to the topology estimator 18 and the packet sampler 24.

Next, the topology estimator 18 estimates a topology based on the supplied packet 28 (subroutine SUB1). The network analyzer 10 stores the estimated network topology data 30 in the storage 20 (step S12).

Next, the network analyzer 10 reads out the estimated network topology data stored in the storage 20 to supply the topology data as network topology data 32 to the rule generator 22 (step S14).

The network analyzer 10 generates a sampling rule 34 based on the network topology data 32 estimated by the rule generator 22 (subroutine SUB2). The rule generator 22 supplies the generated sampling rule 34 to the packet sampler 24.

The packet sampler 24 samples the supplied packet 28 based on the sampling rule 34. The packet sampler 24 sends statistical information 36 as the quality indicator in respect of each network to the network anomaly detector 14.

The network anomaly detector 14 may detect an anomaly in the network based on the supplied statistical information 36 (subroutine SUB3).

The network analyzer 10 repeats this sequential process from the data-capturing step S10 to the anomaly-detecting step SUB3. In this operation described above, the topology of the network is estimated in advance to narrow down objects to be sampled, which can grasp the behavior of packets in a correlation with other networks. Even when the sampling result of a single point is only used to monitor the network, such an advantage can be provided that a failure of the target network is readily distinguished from that of other networks to appropriately detect the anomaly.

The topology estimator 18 in the network analyzer 10 of the illustrative is operative in the estimating method for the network topology and a format for storing the estimated result, which will now be described.

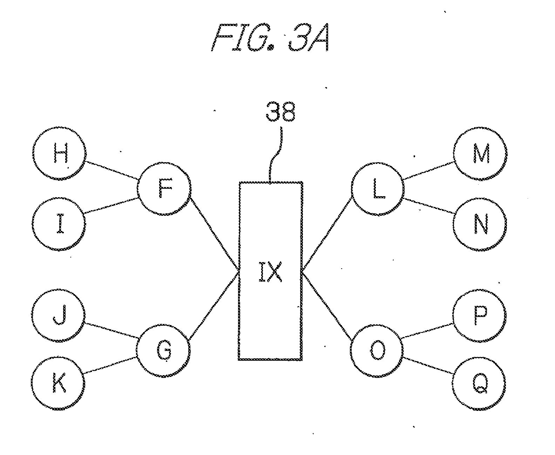

An example of storing format of an illustrative network topology is designed as shown in FIG. 3A. Each circle shown in FIG. 3A indicates a constituent element of the network topology. Elements dealt with in a network topology are not an individual device such as a separate communication terminal but a single network segment, a network or its equivalent such as an autonomous system (AS). The elements are identified with symbols assigned from letters F to Q. The autonomous system means an independent network operated by an organization such as an Internet provider on a large IP (Internet Protocol) network, and is identified by an AS number managed by the Japan Network Information Center (JPNIC), for example.

However, for convenience of monitoring the network, an important router may, for example, be appropriately included as a constituent element. Thus, a network topology estimated by the topology estimator 18 can be said as a topology representing the connection relationship between networks.

In addition, the topology shown in FIG. 3A includes an Internet exchange (IX) 38 serving as an interconnect point between Internet providers.

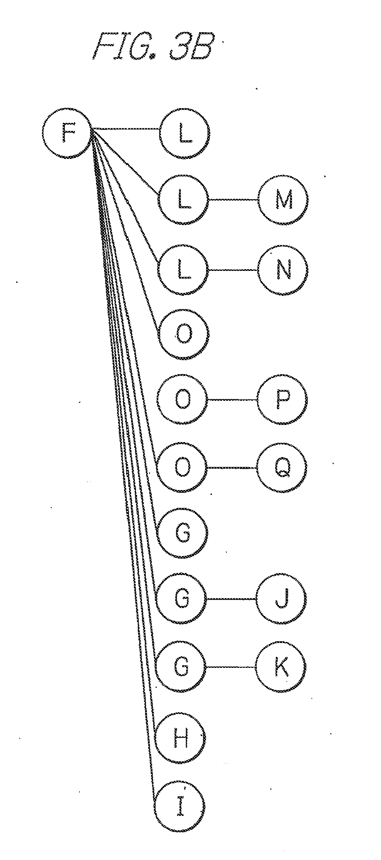

The topology estimator 18 estimates a network topology to describe the network topology as an estimated result in the storing format as shown in FIG. 3B.

The estimated result shown in FIG. 3B represents routes to other networks within the range of two hops from a network *F* serving as a start point in the tree format. For example, networks *L*, *O*, *G*, *H*, and *I* exist within the range of one hop from the network *F*. Therefore, the topology estimator 18 assigns theses networks to daughter nodes of the network *F*. If a network exists two hops away from the network *F*, the topology estimator 18 assigns this network to a granddaughter node.

As described above, a tree is formed on the basis of the network *F* as a root node, and can represent the relation of connection and the number of hops between the network *F* and other networks. A tree-shape network topology may be referred to as a "topology tree".

Next, a general concept for obtaining the estimated result shown in FIG. 3B by the topology estimator 18 will be described, which is subroutine SUB1. The topology estimator 18 determines which one of the packets captured by the data collector 16 is to be used for most efficiently and accurately estimating the topology. The topology estimator 18 could simply use all the packets captured by the data collector 16 to estimate the topology. However, for the purpose of more efficient and accurate estimation, such a type of packet is suitable which predominantly flows on the network or of which the session is stable, and packets of that type are monitored in respect of behavior to estimate the topology based thereon.

Therefore, in this illustrative embodiment, aP2P (Peer to Peer) packet flowing through a network is set as a target packet. The P2P packets are targeted since they are advantageous in that a general P2P system may often be formed and held as an independent P2P network and they have a longer duration of each session so that the topology estimator 18 can readily grasp fluctuation in a quality value of that session.

For example, if a node connected to the network is a file-sharing P2P system, a session between a specific IP address and a plurality of IP addresses is often established, and this specific IP address behaves as a core node. Therefore, the topology estimator 18 readily specifies a session as the center of a traffic, which is preferably used to estimate the topology.

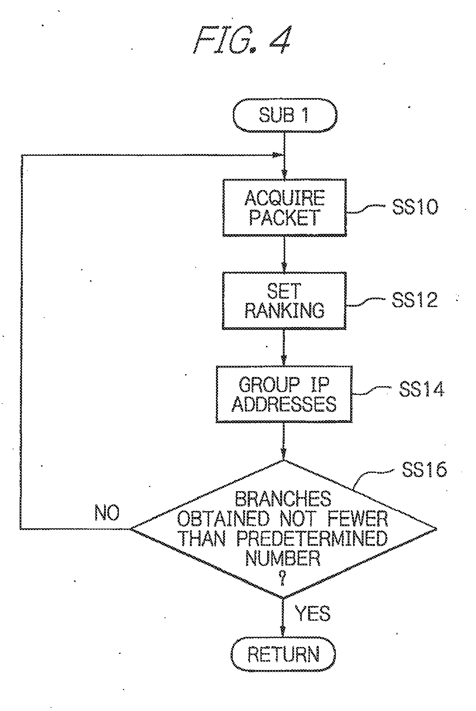

Now, with reference to FIG. 4, operations of the topology estimator 18 will be described. First, a P2P packet is acquired (substep SS10).

The topology estimator 18, when using for the estimation a P2P protocol capable of being specified by its port number, uses a port number included in the packets captured by the data collector 16 to monitor the packets. However, when using a P2P protocol not capable of being specified by its port number for the estimation, the topology estimator 18 determines matching with a behavior pattern defined in advance to thereby specify packets to monitor the packets in this P2P protocol. Since the latter method is similar to that of a signature-based IDS (Intrusion Detection System), this may be referenced.

Next, a P2P session is ranked (substep SS12). The topology estimator 18 ranks the monitored P2P protocols based on their traffic volume. The topology estimator 18 extracts, for example, the top, e.g. fifty sessions from the acquired packets. The top sessions may thus be used since packets can be stably monitored. More specifically, it is estimated that communication from many network segments is centered in the top sessions. The targeting of this estimation causes the higher possibility in covering elements in the topology.

Next, IP addresses are grouped (substep SS14). The topology estimator 18 maps the extracted session for each transmitted and received address, and groups the IP addresses belonging to the same network segment or autonomous system. The IP addresses may preferably be grouped correspondingly to the groups in which the respective IP addresses in the top sessions obtained by the ranking are included. This is because, for example, when routing information that includes existing topology information is available, this routing information can be used to specify the range of IP addresses of network segments or autonomous systems.

In addition, when existing topology information is not available, the topology estimator 18 derives an AS number from an IP address and aggregates and groups the IP addresses in the top sessions obtained by the ranking correspondingly to the autonomous system including the respective IP addresses. Besides, for example, a traceroute command is executed for each IP address in the top sessions obtained by the ranking, thereby acquiring routing information and then grouping networks on the route to roughly estimate where the targeted IP address is located in the networks. The traceroute command is to send some data to a network and receive data returned in response to display a result therefrom.

Such a method is used to group the IP addresses, and then the relation of connection based upon respective IP addresses is aggregated into relationship bases upon each network segment or autonomous system. Eventually, the relation of connection or adjacency relationship between network segments or autonomous systems can be found, thus obtaining the topology tree as shown in FIG. 3B. In routing information on practical IP addresses, the route generally passes a plurality of routers or the like.

However, once it is found which network segment or autonomous system each of these routers belongs to, information on "through which router is the targeted IP address able to reach?" can be translated into information on "through which network segment or autonomous system is the targeted IP address able to reach?" In other words, the IP addresses are grouped, and then the relation of connection based upon a network segment or autonomous system is automatically obtained, by which a topology can be estimated.

Specifically, with the example shown in FIG. 3B, it is assumed that an execution of the traceroute command for IP addresses existing in the networks *F* to *Q* causes a route to be found which passes the packet through a router existing in the network *O*. In this case, a network topology from the network *F* through the network *O* to the network *Q*" is obtained.

Similarly, it is assumed that the traceroute command is executed for the IP addresses occurring from the networks *F* to *H* and then a route is found which passes the packet only through the network segment *H*. In this case, a network topology from the network *F* to the network segment *H* is obtained.

Next, the accuracy of the estimated network topology is determined (substep SS16). Since the topology tree as shown in FIG. 3B is estimated by the topology estimator 18, the topology may be different from an actual topology. However, an enough number of branches obtained generally provides sufficient pieces of session data as the basis. Therefore, the estimation of the network topology is also considered to be accurate.

Thus, the topology estimator 18 sets a predetermined value as a criterion for determining, and determines whether or not a result from obtaining the topology tree by grouping the IP addresses, for example, provides obtained branches equal in number to or more than the predetermined value. In addition, the topology estimator 18 may be adapted, from the viewpoint of a processing time or the amount of storage data, to estimate the topology after a certain period of time to determine this estimated result.

If the branches are obtained which are equal in number to or more than the predetermined number (YES), then the topology estimator 18 proceeds to the end of the topology estimation process. Otherwise, i.e. if the branches are not obtained which are equal in number to or more than the predetermined number (NO), the control returns to substep SS10, the packet acquisition process. The reason for returning to the packet acquisition process is that the more pieces of captured session data or the longer processing time is preferred in order to improve the accuracy of estimating the topology as high as possible.

However, since the session data used for the estimation are extracted as the top 50 sessions with the instant embodiment, even if the estimation is finished halfway as described above, these sessions are considered to include many devices operating as a core node in the P2P network. Therefore, these sessions are considered to be suitable for estimating the topology because of their stability as a session. Such a method is appreciated as allowing a topology to be estimated with certain accuracy.

After acquiring the accuracy of estimating the topology, the topology estimator 18 progresses to the return. After the returning, the network topology data 30 representing the obtained topology tree are outputted to the storage 20 to be stored.

Moreover, when targeting a specific protocol or port number in order to estimate the topology, the topology estimator 18 may store this targeted object in combination with the topology tree in the storage 20, and may use the targeted object later on in order to generate a sampling rule by the rule generator 22.

The topology estimator 18 may have a lower threshold value of the branches of the topology set for the process in advance so as to regenerate the topology tree when the branches of the topology tree are fewer than the lower threshold value. Alternatively, the topology tree maybe regenerated at intervals of a predetermined period of time, e.g. hourly or daily.

The topology estimator 18 uses routing information including existing topology information, if available, to estimate the topology. As an example, in an application which uses a protocol such as BGP (Border Gateway Protocol) capable obtaining a full route, this routing information may be used for the estimation. In addition, the topology can be estimated by a route-change message such as OSPF (Open Shortest Path First) or RIP (Routing Information Protocol).

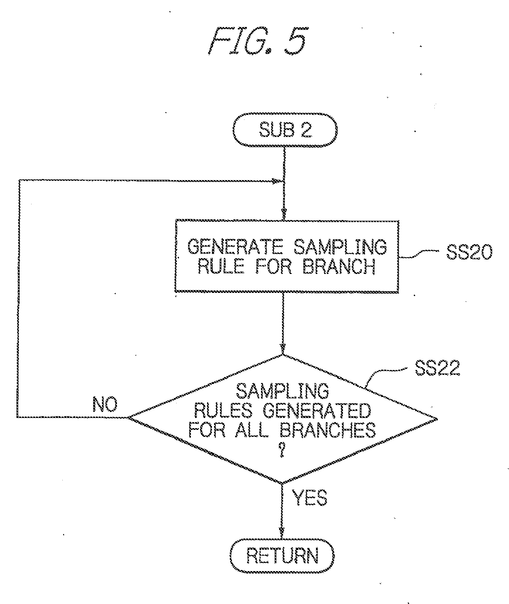

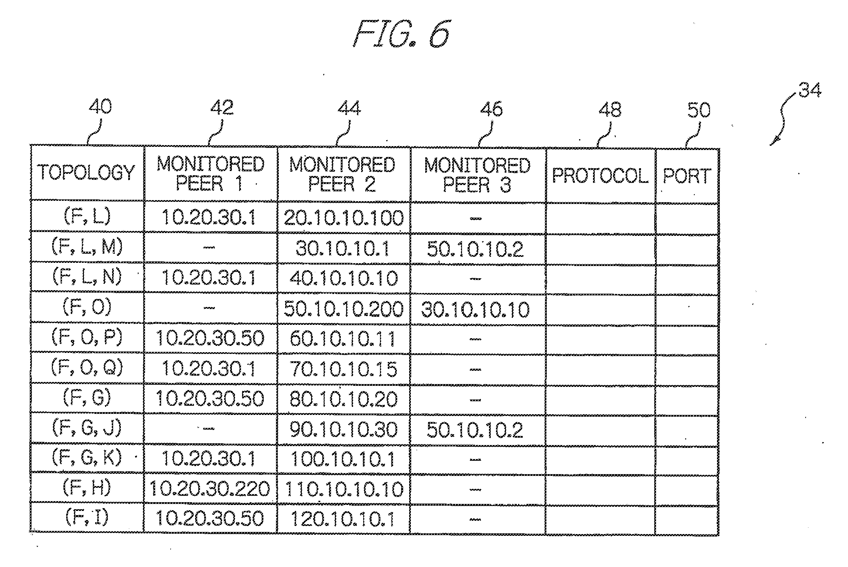

Next, with reference to FIGS. 5 and 6, the process by the rule generator 22, subroutine SUB2, will be described. The rule generator 22 reads out the network topology data 30 for the topology tree shown in FIG. 3B generated by the topology estimator 18 from the storage 20 to produce the sampling rule 34. FIG. 6 shows an example of this sampling rule.

The rule generator 22 generates a sampling rule based on the read-out network topology data 32 (substep SS20). The sampling rule is a criterion for sampling by the packet sampler 24, and is data in a table format having at least one line or row assigned to each branch of the topology tree.

The table format shown in FIG. 6 includes a plurality of item columns. For example, the item columns as shown include a "topology" 40, a "monitored peer 1" 42, a "monitored peer 2" 44, a "monitored peer 3" 46, a "protocol" 48, and a "port" 50.

The "topology" 40 is a rule for sampling a network route corresponding to one branch of the topology tree. Specifically, the "topology" 40 contains the names of networks passing from a root node to a leaf node in the order of passing the networks.

The "monitored peer 1" 42, in the case shown in FIG. 3B, is a rule for sampling the IP address to be monitored in the network represented by the root node as a monitoring point, i. e. the network *F*. In the example shown in FIG. 6, the network *F* as the root node is found to approximately correspond to a network address "10.20.30.*" and include some IP addresses to be monitored.

Since the IP addresses to be monitored in this case are included in the top 50 sessions extracted by the topology estimator 18, these IP addresses can also be said to be a monitored priority target constantly utilizing the P2Pprotocol as a target.

The "monitored peer 2" 44 is a rule for sampling the IP address to be monitored in the network represented by the leaf node in the rightmost of the topology tree shown in FIG. 3B. According to data in the first line of FIG. 6, a user device having its IP address "10.20.30.1" in the network *F* is found to communicate with another user device having its IP address "20.10.10.100" in the network *L*.

Since the IP addresses to be monitored in this case are also included in the top 50 sessions, these IP addresses can also be said to be a monitored priority target like the "monitored peer 1" 42.

The "monitored peer 3" 46 is a rule for sampling, when a party to communicate defined by the "monitored peer 2" 44 is not included in the network to which the monitoring point belongs, an IP address thither via the root node, i. e. the network *F* in this embodiment.

According to data in the second and fourth lines of FIG. 6, the IP address "30.10.10.1" in the network *M* is found to communicate toward the IP address "50.10.10.2" in the network *O* through the network *F*.

Since the IP addresses to be monitored in this case are also included in the top 50 sessions, these IP addresses can also be said to be a monitored priority target like the "monitored peer 1" 42 and the "monitored peer 2" 44.

A "protocol" 48 is a rule for sampling the name of a protocol when the protocols to be sampled are restricted. A "port" 50 is a rule for sampling a port number when a specific service is monitored or when the port numbers of services to be sampled are restricted.

In the example of the data shown in FIG. 6, the IP address "10.20.30.1" existing in the network *F* often appears. This indicates the possibility that the user of a communicator having this IP address constantly uses a specific P2P protocol.

Next, the rule generator 22 determines whether or not the sampling rules have been produced for all the branches in the read-out network topology data 32 (substep SS22). When the sampling rules have not yet been generated for all the branches (NO), then the step returns to substep SS20, the generating process for the sampling rule. Otherwise, namely, when the sampling rules have been generated for all the branches (YES), the rule generator 22 outputs the generated sampling rule 34 to the packet sampler 24 to progress to the return. Thereby, the subroutine SUB2 is finished.

When a plurality of IP addresses to be monitored exist for the same value of the "topology" 40, the rule generator 22 generates a line specific to each monitored target IP address to operate so as to readily distinguish the failures.

When the IP address "20.10.10.101" communicating with the IP address "10.20.30.1" in the network *F* exists in the network L, the following lines are newly generated in addition to the first line in FIG. 6.
(a) "Topology" = (*F, L*)
(b) "Monitored peer 1" = 10.20.30.1
(c) "Monitored peer 2" = 20.10.10.101

Similarly, whenaplurality of protocols or port numbers to be monitored are set for the same value of the "topology" 40, the separate lines may be generated.

Next, the process by the packet sampler 24 will be briefly described. The packet sampler 24 samples the supplied packet 28 based on the supplied sampling rule 34 to generate the statistical information 36.

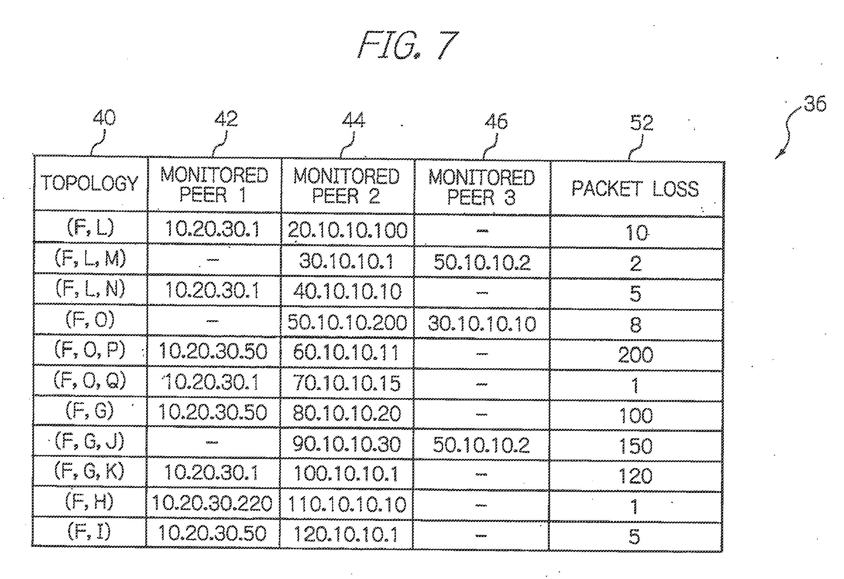

Since the packet sampler 24 generates the statistical information 36 based on the sampling rule 34, almost the same items as FIG. 6 are formed in the items of the table format shown in FIG. 7. However, because of the items "protocol" 48 and "port" 50 in FIG. 6 not having any sampling rules being set, and for the purpose of simplifying the description, the columns of these items are not shown in the table of FIG. 7.

The packet sampler 24 counts values serving as the quality indicator of packets for each counting unit specified by the sampling rule to generate a "Packet Loss" 52 as the quality indicator in the table shown in FIG. 7.

The packet sampler 24 samples the packet captured by the data collector 16 at intervals of a predetermined period of time such as one minute to count the values of the "Packet Loss" 52 and store the sampled data as the statistical information 36 in the column of the "Packet Loss" 52.

According to data in the fifth line in FIG. 7, in the communication between the IP address "10.20.30.50" in the "monitored peer 1" 42 and the IP address "60.10.10.11" in the "monitored peer 2" 44, 200 packet losses of are found to occur.

The system may be set to store the statistical information 36 in the storage 20, which may be useful for reading out later on. However, that is not restrictive. Such information may be stored in any type of storage device or medium, such as a memory device not depicted.

By referencing to this statistical information 36, it can be determined whether or not an anomaly occurs in the network including an IP address targeted as an monitoring priority. Since the network analyzer 10 can obtain the statistics of the quality indicator for each network forming the network topology, a failure in the target network can be distinguished from the influence of other networks even by using only a sampling result at a single point.

Thus, the network analyzer 10 does not simply count the quality indicators of a network, but count the quality indicators for the respective constituent elements of the network topology aggregated in each network. Therefore, when any network has a failure caused, the failure in the network is reflected to the result of the counted quality indicators, thereby enabling the distinction of failures. That, of course, effectively relies upon the appropriate estimation for the network topology.

Moreover, since the statistical information 36 generated by the packet sampler 24 includes the quality indicator value of the network, the statistical information 36 may be stored as a general-purpose quality monitoring technique in MIB (Management Information Base). Thereby, SNMP (Simple Network Management Protocol) can be used from any exterior of the packet sampler 24 to acquire the statistical information.

It is to be noted that the rule generator 22 generates a sampling rule based on a topology tree to supply the sampling rule 34 to the packet sampler 24. At this time, so as to equalize the sampling by the packet sampler 24 for each line in FIG. 7, the sampling rule may be adjusted in advance.

For example, in FIG. 7, when a plurality of lines are provided for the same topology because of a plurality of IP addresses to be monitored in the same network segment, more packets exclusively in this topology tend to be sampled than other topologies. In this case, so as to equalize the amount of sampling for each element of the topology, the rule generator 22 can make an appropriate adjustment such as equalizing the number of lines for the identical topology. Thereby, when monitoring a quality problem later on, the elements of each topology can be evaluated on the equalized criterion, which can contribute to the appropriate monitoring.

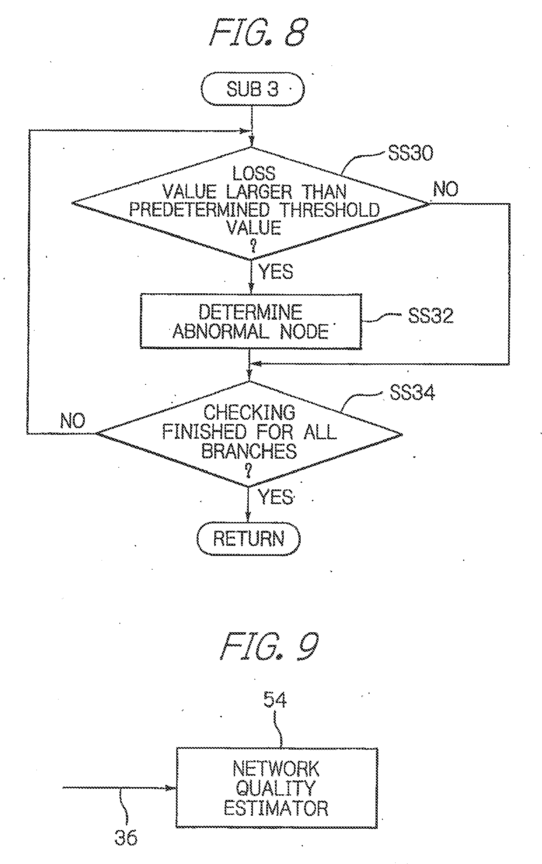

Now, the process (subroutine SUB3) by the network anomaly detector 14 will be described. The network anomaly detector 14 receives the supplied statistical information 36 to detect an anomaly in the network based on this statistical information 36. FIG. 8 shows steps for the detection.

In the network anomaly detector 14, a predetermined packet loss value is set as a criterion for determining. The network anomaly detector 14 determines whether or not the supplied packet loss is more than the predetermined packet loss value (substep SS30). When the determination is true (YES), the "topology" 40 in the appropriate line is checked to progress to substep SS32 of topology evaluation process. Otherwise, i.e. when the determination is false (NO), the quality is determined to be good, progressing to substep SS34 of determination process for completing the checking step.

Specifically, according to data in the fifth line of FIG. 7, high, 200 packet losses occur in the topology (*F*, *O*, *P*). This shows that a quality problem occurs in either of the elements *F*, *O*, and *P* forming this topology.

The topology evaluation process extracts the topology including the same route as the problem detected, and makes evaluations as to whether or not the packet loss in the extracted topology exceeds the predetermined packet loss value (substep SS32). The extracted topology, namely, the node or sequence of nodes having common branches is treated as a boundary to determine that it is normal when the packet loss in the boundary is equal to or less than the predetermined packet loss value, thus specifying the network or device having a problem caused. Otherwise, i.e. when the packet loss in the extracted topology exceeds the predetermined packet loss value, the node sequence is also evaluated to be abnormal.

In the example described above, furthermore, according to data in the fourth line of FIG. 7, it is found that the packet loss in a higher-ordered topology (F, O) than the fifth line is eight, i.e. lower. From this result, the quality problem is specified to occur in either the network P or the device specified by the "monitored peer 2" 44 in the fifth line.

According to data in the seventh to ninth lines of FIG. 7, many packet losses occur in the topologies (F, G), (F, G, J), and (F, G, K). Since such many packet losses do not occur in other topologies including the network F, the quality problem can be estimated to be likely to occur in the network *G*.

Such a procedure may be utilized that the data in the same line are monitored in time sequence to determine whether to be abnormal in packet loss, thus determining, when the degree of difference from a static state increases, that an abnormal value occurs. That relies upon the fact that, compared with a network constantly subjected to, for example, much packet loss or large delay, an abrupt increase of packet loss is possibly not determined abnormal.

By contrast, a network having less packet loss in its static state could be determined as if it were subjected to a constant packet loss when compared with a network constantly having much packet loss. It can therefore be said preferable that the network anomaly detector 14 detects an abnormal value by monitoring data in the same line in time sequence.

Thereafter, it is determined whether or not all the branches have been checked (substep SS34). When the check is not finished (NO), the step returns again to substep SS30, the determination for evaluating the packet loss value. When the check is finished (YES), the step progresses to the return to finish the determination for evaluating.

As described above, in the statistical information shown in FIG. 7, since the quality indicator is counted for each element in the network topology, the network anomaly detector 14 can not only detect the quality problem occurring in the target network corresponding to the network *F* in this case merely but also estimate the quality problem caused in other networks and its extent of influence.

In addition, when a network failure or the like occurs, it can be quickly estimated in time sequence where the failure occurs in the network and whether or not as a result it influences other networks. Since an operator can quickly grasp and treat a session influenced by such a failure, the evaluation in this detection can contribute to the stability in quality of the entire network.

Well, with reference to FIG. 9, an alternative embodiment of the network analyzer 10 will be described to which the network monitor in accordance with the present invention is applied. The network analyzer 10 of the alternative embodiment has a function to monitor the quality of a network in time sequence based on the statistical information 36 supplied from the sampler 12 to estimate the quality of the network. This estimating function is to estimate the future quality indicator from the past quality indicator by a learning function. To the learning function, learning algorithms of known techniques are applicable. In order to perform this function, the network analyzer 10, as shown in FIG. 9, is provided with a network quality estimator 54 instead of the network anomaly detector 14, FIG. 1, used in the previous embodiment.

The network quality estimator 54 may be implemented by hardware such as circuit devices accomplishing its function, or by a processor system such as a CPU or a microcomputer and software defining its operation. The network analyzer 10 may include the network anomaly detector 14 and the network quality estimator 54.

For example, a network failure currently occurring may by served by the network anomaly detector 14 while the possibility of a future failure caused may be predicted by the network quality estimator 54, and both of them may operate as a "monitoring unit".

According to this configuration, since the network quality estimator 54 predicts the possibility of causing a future failure in the network based on the trend of change in behavior of packets, not only a subsequent provision after causing a failure but also a preceding preventative provision prior to causing a failure are available, which can contribute to a stable network operation.

In the illustrative embodiments described above, the topology estimator 18, when estimating a topology, treats the network segments or autonomous systems as targets within the range of two hops from the network *F* as a start point. However, if conditions defined by the processing capacity of the device or the memory capacity for data are satisfactory, then a network or autonomous system in the range of further hops may be a target of the topology tree.

In the illustrative embodiments described above, the topology estimator 18, when estimating a topology, targets the P2P protocol. The network analyzer 10 of the embodiments targets the stability of the session of the P2P protocol to improve the accuracy of estimating a topology. The network analyzer 10 is not restricted to such targeting, but may target the traffic volume to estimate a topology. Now, the traffic volume involves the followings, for example:
(1) The amount of the traffic of RTP (Real-time Transport Protocol);
(2) The number of destination addresses for a specific originating address;
(3) The amount of a traffic where a protocol such as P2P with constant communication is used;
(4) The amount of a traffic for a specific website;
(5) A service having a heavy traffic such as a video distribution site;
(6) The duration of a session; and
(7) The number of times of an IP address appearing.

Such a session with a large traffic volume is targeted to thereby improve the coverability or reliability of the topology in an estimated result, which can improve the detection capability for a problem in a network.

In addition, another point to be targeted about the topology estimation is a number of packets. Now, a number of packets involves the followings, for example:
(1) The number of packets in RTP;
(2) The number of destination addresses for a specific originating address;
(3) The number of packets where a protocol such as P2P with constant communication is used;
(4) The number of packets for a specific website;
(5) A service having a large number of packets such as a video distribution site;
(6) The duration of a session; and
(7) The number of times of an IP address appearing.

Such a session with a large number of packets is also targeted to thereby improve the coverability or reliability of the topology in an estimated result, which can improve the detection capability for a problem in a network.

Furthermore, another point to be targeted about the topology estimation is the number of used ports. Now, the number of used ports involves the followings, for example:
(1) The number of ports used by RTP;
(2) The number of ports used by a protocol such as P2P with constant communication; and
(3) A service having a large number of used ports.

Such a session with a large number of used ports is also targeted to thereby improve the coverability or reliability of the topology in an estimated result, which can improve the detection capability for a problem in the network.

The entire disclosure of Japanese patent application No. 2008-6703 filed on January 16, 2008, including the specification, claims, accompanying drawings and abstract of the disclosure, is incorporated herein by reference in its entirety.
Methods in accordance with embodiments of the invention may comprise the following features.
According to one embodiment a method for sampling communication data supplied through a plurality of nodes based on a sampling rule, CHARACTERIZED BY comprising:
a first step of acquiring the communication data by data capture means for capturing the communication data flowing through the plurality of nodes;
a second step of estimating a topology of the plurality of nodes by topology estimating means (18) for estimating the topology of the plurality of nodes based on the acquired communication data;
a third step of storing the estimated topology of the plurality of nodes in memory means (20) for storing the estimated topology of the nodes;
a fourth step of generating the sampling rule by rule generation means (22) for reading out the estimated result from the memory means (20) to generate a predetermined item for each read-out topology of the nodes as the sampling rule; and
a fifth step of sampling the communication data by sampler means for sampling the supplied communication data based on the generated sampling rule.
According to one embodiment said second step sets a root node among the plurality of nodes based on a transmitted or received address of the communication data, and links the connected nodes sequentially from the root node to group the connected nodes into a group to output the tree information of the estimated topology by grouping as the estimated result to the memory means (20).
According to one embodiment said second step sets a network or autonomous system (AS) equivalent to a network as one of the plurality of nodes to a unit, and uses an AS number for the connected nodes sequentially from a set root node to group the connected nodes into a group to output the tree information of the estimated topology by grouping as the estimated result to the memory means (20).
According to one embodiment said second step sets a predetermined number of the autonomous systems, and uses the communication data captured on transmitting or receiving by a communication device existing within the predetermined number of the autonomous systems to group the device into a group to output the tree information of the estimated topology by grouping as the estimated result to the memory means (20).
According to one embodiment said second step ranks a session including the captured communication data on a predetermined criterion, and uses the communication data included in the session having a rank equal to or higher than a predetermined rank to group the session into a group to output the tree information of the estimated topology by grouping as the estimated result to the memory means (20).
According to one embodiment said second step uses the captured communication data in a session having a traffic volume equal to or larger than a predetermined traffic volume to group the session into a group to output the tree information of the estimated topology by grouping as the estimated result to the memory means (20).
According to one embodiment said second step uses the captured communication data in a session having the number of packets equal to or larger than a predetermined number to group the session into a group to output the tree information of the estimated topology by grouping as the estimated result to the memory means (20).
According to one embodiment said second step uses the captured communication data in a session having ports used for the communication data equal in number to or more than a predetermined number of ports to group the session into a group to output the tree information of the estimated topology by grouping as the estimated result to the memory means (20).
According to one embodiment said second step uses route information in a network on the nodes to group the nodes into a group to output the tree information of the estimated topology by grouping as the estimated result to the memory means (20).
According to one embodiment said second step uses communication data transmitted or received by a communication device existing within a predetermined number of hops among the captured communication data to group the device into a group to output the tree information of the estimated topology by grouping as the estimated result to the memory means (20).
According to one embodiment said second step equalizes a communication packet volume to be sampled in each estimated result to store the estimated result in the memory means (20).
According to one embodiment a method for monitoring a network, CHARACTERIZED BY comprising:
said first to fifth steps of the method in accordance with claim 14; and
a sixth step of monitoring a problem by monitoring means for using a result obtained by said method to monitor the problem in the node;
said sixth step counting the sampling result in time sequence and detecting an abnormal value to detect a problem in the node.
According to one embodiment said sixth step stores a monitoring result in the nodes in the memory means (20) to use the monitoring result stored to estimate a quality of the node.

While the present invention has been described with reference to the particular illustrative embodiments, it is not to be restricted by the embodiments. It is to be appreciated that those skilled in the art can change or modify the embodiments without departing from the scope and spirit of the present invention.

## Claims

1. A device (10) for sampling communication data supplied through a plurality of nodes based on a sampling rule, **CHARACTERIZED BY** comprising:
data capture means (16) for acquiring the communication data flowing through the plurality of nodes;
topology estimating means (18) for estimating a topology formed by the plurality of nodes based on the acquired communication data;
memory means (20) for storing at least tree information of the estimated topology;
rule generation means (22) for reading out the tree information of the estimated topology from said storage (20) and setting a predetermined item to be sampled for each read-out tree information as the sampling rule to generate the sampling rule; and
sampling means (24) for sampling the acquired communication data based on each generated sampling rule.

2. The device (10) in accordance with claim 1, **CHARACTERIZED IN THAT** said topology estimating means (18) sets a root node among the plurality of nodes based on a transmitted or received address of the communication data, and links the connected nodes sequentially from the root node to group the connected nodes into a group to output the tree information of the estimated topology by grouping as the estimated result to said memory means (20).

3. The device (10) in accordance with claim 1 or 2, **CHARACTERIZED IN THAT** said topology estimating means (18) sets a network or autonomous system (AS) equivalent to a network as one of the plurality of nodes to a unit, and uses an AS number for the connected nodes sequentially from the set root node to group the connected nodes into a group to output the tree information of the estimated topology by grouping as the estimated result to said memory means (20).

4. The device (10) in accordance with claim 3, **CHARACTERIZED IN THAT** said topology estimating means (18) sets a predetermined number of the autonomous systems, and uses the communication data captured on transmitting or receiving by a communication device existing within the predetermined number of the autonomous systems to group the device into a group to output the tree information of the estimated topology by grouping as the estimated result to said memory means (20).

5. The device (10) in accordance with one of the preceding claims, **CHARACTERIZED IN THAT** said topology estimating means (18) ranks a session including the captured communication data on a predetermined criterion, and uses the communication data included in the session having a rank equal to or higher than a predetermined rank to group the session into a group to output the tree information of the estimated topology by grouping as the estimated result to said memory means (20).

6. The device (10) in accordance with one of the preceding claims, **CHARACTERIZED IN THAT** said topology estimating means (18) uses the captured communication data in a session having a traffic volume equal to or larger than a predetermined traffic volume to group the session into a group to output the tree information of the estimated topology by grouping as the estimated result to said memory means (20).

7. The device (10) in accordance with one of the preceding claims, **CHARACTERIZED IN THAT** said topology estimating means (18) uses the captured communication data in a session having packets equal in number to or more than a predetermined number to group the session into a group to output the tree information of the estimated topology by grouping as the estimated result to said memory means (20).

8. The device (10) in accordance with one of the preceding claims, **CHARACTERIZED IN THAT** said topology estimating means (18) uses the captured communication data in a session having ports used for the communication data equal in number to or more than a predetermined number of ports to group the session into a group to output the tree information of the estimated topology by grouping as the estimated result to said memory means (20).

9. The device (10) in accordance with one of the preceding claims, **CHARACTERIZED IN THAT** said topology estimating means (18) uses route information in a network on the nodes to group the nodes into a group to output the tree information of the estimated topology by grouping as the estimated result to said memory means (20).

10. The device (10) in accordance with one of the preceding claims, **CHARACTERIZED IN THAT** said topology estimating means (18) uses communication data transmitted or received by a communication device existing within a predetermined number of hops among the captured communication data to group the data into a group to output the tree information of the estimated topology by grouping as the estimated result to said memory means (20).

11. The device (10) in accordance with one of the preceding claims, **CHARACTERIZED IN THAT** said topology estimating means (18) equalizes a communication data volume to be sampled in each estimated result to store the estimated result in said memory means (20).

12. A network monitor **CHARACTERIZED BY** comprising:
said device (10) in accordance with one of the claims 1 to 11; and
monitoring means for using a result obtained by said device (10) to monitor a problem in the node,
said monitoring means counting the sampling result in time sequence and detecting an abnormal value to detect a problem in the node.

13. The monitor in accordance with claim 12, **CHARACTERIZED IN THAT** said monitoring means stores a monitored result in the nodes in said memory means (20) to use the monitored result stored to estimate a quality of the node.

14. A method for sampling communication data supplied through a plurality of nodes based on a sampling rule, **CHARACTERIZED BY** comprising:
a first step of acquiring the communication data by data capture means for capturing the communication data flowing through the plurality of nodes;
a second step of estimating a topology of the plurality of nodes by topology estimating means (18) for estimating the topology of the plurality of nodes based on the acquired communication data;
a third step of storing the estimated topology of the plurality of nodes in memory means (20) for storing the estimated topology of the nodes;
a fourth step of generating the sampling rule by rule generation means (22) for reading out the estimated result from the memory means (20) to generate a predetermined item for each read-out topology of the nodes as the sampling rule; and
a fifth step of sampling the communication data by sampler means for sampling the supplied communication data based on the generated sampling rule.

15. The method in accordance with claim 14, wherein said method further comprises:
The step or steps as carried out by the means defined in one of claims 2 - 13.
